(19) Europäisches Patentamt
European Patent Office
Office européen des brevets

(11) **EP 2 289 740 B1**

(12) **EUROPEAN PATENT SPECIFICATION**

(45) Date of publication and mention
of the grant of the patent:
**18.04.2012 Bulletin 2012/16**

(51) Int Cl.:
***B60R 21/0132*** *(2006.01)*

(21) Application number: **09169146.9**

(22) Date of filing: **01.09.2009**

(54) **Method and control device for the detection of a ditch drive of a vehicle**

Verfahren und Steuerungsvorrichtung zur Erkennung einer Grabenfahrt eines Fahrzeugs

Procédé et dispositif de contrôle pour la détection d'un embardement de fossé d'un véhicule

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**02.03.2011 Bulletin 2011/09**

(73) Proprietors:
• **Robert Bosch GmbH**
  **70469 Stuttgart (DE)**
• **Volvo Car Corporation**
  **405 31 Göteborg (SE)**

(72) Inventors:
• **Rauh, Christian**
  **81377, Muenchen (DE)**
• **Becker, Jens**
  **70597, Stuttgart (DE)**
• **Nilsson, Paer**
  **41671, Goeteborg (SE)**

• **Wogel, Anders**
  **42470, Olofstorp (SE)**
• **Axelson, Anders**
  **42341, Torslanda (SE)**
• **Doerr, Alfons**
  **70597, Stuttgart (DE)**
• **Harda, Peter**
  **41324, Goeteborg (SE)**
• **Rittler, Stephan**
  **73660, Urbach (DE)**
• **Hild, Hansjoerg Markus**
  **70806, Kornwestheim (DE)**
• **Koerner, Olaf**
  **71640, Ludwigsburg (DE)**
• **Korn, Christian**
  **70190 Stuttgart (DE)**

(56) References cited:
**EP-A- 2 058 180          GB-A- 2 335 521
US-A1- 2004 176 897**

**Description**

Prior art

The present invention relates to a method for the detection of a ditch drive of a vehicle according to claim 1, a control device according to claim 11 as well as a computer program product according to claim 12.

For the activation of pyrotechnic safety means or restraint means in a vehicle, often a large impulse transfer to the passenger cell, which occurs as a result of a collision with another traffic participant, a moving or a static obstacle, is detected and analyzed. Depending on the restraint means, time-optimized activation thereof may serve to gently reduce the movements of the occupants relative to the passenger cell, which result from the impulse transfer, whereby the risk of injury may be minimized. As a rule, one may differentiate between time-critical and time-uncritical restraint means. While conventional front and side bags may provide protection only for the duration of a small fraction of a second after activation thereof, restraint means such as pyrotechnic belt pretensioners and curtain bags or window bags may offer protection for a substantially longer period of time, i.e. even up to several tens of seconds. It depends on the crash type and the crash severity, which restraint means are activated in the case of a crash. In the case of a crash, usually time-critical and time-uncritical restraint means are activated within a very small time frame by the trigger functions of the electronic safety system. For a multitude of simple crash scenarios, the temporal coupling of the activation of time-critical and time-uncritical restraint means is reasonable but not mandatory. Considerably earlier activation of the time-uncritical restraint means might have the effect of increasing their protective effect instead of reducing it. This specifically applies when a movement of occupants relative to the passenger cell, which might on the one hand substantially impair the protective effect of the time-critical restraint means and on the other hand itself result in injuries, may be prevented prior to the actual vehicle collision in complex driving scenarios.

DE 10 2006 045 682 B3 shows an approach of detecting a ditch drive of a vehicle on the basis of a steering angle or a detected change of the steering angle and correspondingly altering a trigger criterion. This is, however, disadvantageous as, after the vehicle entering the ditch, a reaction time of the driver must be awaited until the steering means will be actuated so that precious time is lost before restraint means required in the driving situation having occurred may be actuated.

EP 2 058 180 A discloses a vehicle rollover prediction and restraint device deployment system which includes a plurality of data sensors to generate a plurality of data signals and a controller configured to receive the data signals and to deploy re-settable and non-re-settable restraint devices. The controller is configured operate in accordance with a method according to the invention to activate at least one re-settable restraint device when one or more of the data signals exceed a first threshold, indicating that the vehicle is in a position or undergoing movement that indicates a potential for vehicle rollover and to de-activate the at least one re-settable restraint device when one or more of the data signals fall below the first threshold.

US 2004/0176897 A1 discloses a method and system for classifying vehicle conditions. Lateral acceleration information, vertical acceleration information, and roll angle information is acquired and the roll angle information is used for compensating the acceleration information for the effects of gravity. The compensated acceleration information is compared with one or more thresholds to change calibrate able counter values and additional threshold comparisons are used to determine the vehicle condition or rollover type.

GB 2 335 521 A discloses a safety arrangement which is provided in a motor vehicle. The safety arrangement comprises a roll sensor apparatus to sense conditions indicative of a roll-over accident to provide an output signal to trigger actuation of a safety device. The roll sensor apparatus is responsive to both an angular parameter such as angular speed of the vehicle -for example, whether the angular speed of the vehicle exceeds a threshold and also responds to the lateral acceleration again comparing the latter acceleration with a threshold. One or both of the thresholds used for comparison purposes may be a function of another parameter of the vehicle, or may be fixed thresholds.

Disclosure of the invention

On this background, the present invention serves to present a method, furthermore a control device employing this method as well as finally a respective computer program product according to the independent claims. Advantageous embodiments result from the respective dependent claims and the subsequent description.

The present invention provides a method for the detection of a ditch drive of a vehicle, the method comprising:

- receiving a roll acceleration sensor signal representing an acceleration of at least a part of the vehicle around a longitudinal axis of the vehicle;
- determining a detection variable using the roll acceleration sensor signal or using the roll acceleration sensor signal as a detection variable; and
- detecting the ditch drive of the vehicle when the detection variable exhibits a value lying within a predetermined detection value range.

The present invention further provides a control device configured to effect or implement the steps of the inventive method. This alternative embodiment of the invention in the form of a control device may also serve to achieve the object underlying the invention in a fast and efficient manner.

At hand, a control device may be an electric device, which processes sensor signals and, in dependence thereon, outputs control signals. The control device may comprise an interface, which may be configured in hardware and/or in software.

In the case of a configuration in hardware, these interfaces may, for example, be part of a so-called system ASIC, which comprises diverse functions of the control device. However, it is also possible that the interfaces be individual, integrated circuits or at least partially consist of discrete components. In the case of a configuration in software, the interfaces may be software modules, which may be provided on a microcontroller next to other software modules, for example.

What is also advantageous is a computer program product with a program code stored on a machine-readable carrier such as a semiconductor memory, a hard disk or an optical memory and utilized for performing the method according to any one of the aforementioned embodiments, when the program is executed on a control device.

The present invention provides advantage that, by the use of respective roll quantity sensors (which detect a roll acceleration, a roll rate or a roll angle of the vehicle, for example), a fast and efficient detection of a ditch drive of the vehicle may be effected. Rolling is a vehicle movement on the vehicle's longitudinal axis. The present invention is specifically based on the fact that, in the vehicle entering the ditch, specifically at a speed higher than a minimum speed, the result will be a drop of wheels on one side of the vehicle. This rebound will have the effect that at least one axle of the vehicle will tilt faster than the vehicle body. For deflecting the vehicle again, a roll movement of the vehicle body is effected, with the result of a roll acceleration in the vehicle. This roll acceleration may be used for detecting the ditch drive of the vehicle.

The present invention further offers the advantage that the ditch drive of the vehicle may be detected rapidly by the use of respectively formed sensors, without having to wait for a steering intervention by the driver. Furthermore, by giving respective threshold values, a very precise evaluation may be effected in a respectively configured control device so that a fast and highly precise detection of the respective driving situation by the use of cost-effective components is made possible.

According to an advantageous embodiment of the invention, in the step of receiving, at least one further acceleration signal value may be received, the at least one further acceleration signal value representing a vertical acceleration with respect to the vehicle and/or the acceleration of gravity, and wherein, in the step of determining, the detection value is determined using the at least one further acceleration signal value. Such an embodiment of the invention provides the benefit that, by the use of the roll acceleration on the one hand, and the use of a vertical acceleration with respect to the vehicle on the other hand, there is the possibility of a comparison (or a quotient forming) of these two accelerations. This enables a more precise differentiation between an uncritical ramp drive, in which safety means need not be triggered, and a safety-critical ditch drive, in which e.g. respective occupant restraint means should be triggered.

What is advantageous is when, in the step of receiving, an inertia information of the vehicle with respect to the current driving conditions and/or a mass information on the mass of the vehicle is received, wherein, in the step of determining, the detection value is determined based on the inertia information and/or the mass information. Such an embodiment of the present invention offers the advantage that precise vehicle characteristics may be accounted for in the determining of a ditch drive, with the result that the detecting of the ditch drive of the vehicle may be effected more precisely.

In a further embodiment of the present invention, in the step of detecting the ditch drive may be detected when the detection value lies in a detection value range fundamentally including values between zero and a final value, the final value representing half of a width of the vehicle. Such an embodiment of the present invention offers the advantage that faulty and therefore non-plausible sensor values may be detected in the evaluation. This represents a further safety gain.

Furthermore, in another embodiment of the invention, in the step of detecting, the ditch drive may be detected when both the detection value was at least temporarily within the predetermined detection value range and, following this, the roll acceleration sensor signal, a roll rate additionally received or a roll angle additionally received assumes a value larger than a predefined roll value threshold within a predetermined time interval. Such an embodiment of the present invention provides the benefit that first a very precise start criterion for the detection of a ditch drive of the vehicle is utilized but the further course of the ditch drive is also taken into account by means of a traced roll movement. This represents a further precision in the detection of the ditch drive.

It is also advantageous when, in the step of receiving, further a plausibilization signal is received, which represents a physical quantity independent from the roll movement of the vehicle, and wherein, in the step of detecting, the ditch drive of the vehicle is detected when the plausibilization signal fulfils a predetermined plausibilization criterion. Such an embodiment of the present invention offers the advantage of a verification of the detected ditch drive by means of signals, which are detected in a manner independent from the roll movement of the vehicle. This enables an even more precise detection of a ditch drive of the vehicle, whereby an additional safety gain is yielded for an occupant of the vehicle.

Furthermore, in a further embodiment of the invention in the step of receiving, at least one plausibilization signal is received, which represents a wheel speed of a wheel of the vehicle, the yaw rate of the vehicle, a steering intervention by the driver of the vehicle or at least a braking or driving torque at one of the edges of the vehicle. Such plausibilization signals offer, next to a simple detection possibility, a good and reliable option for the plausibilization of a ditch drive of the vehicle.

In another embodiment of the invention, in the step of receiving, further a speed sensor signal may be received, which represents a speed of the vehicle, wherein, in the step of detecting, a ditch drive is detected when the speed sensor signal exhibits a value lying above a predetermined speed threshold value. The advantage of such an embodiment of the invention consists in the fact that, firstly, a safety-critical ditch drive will mostly occur when the vehicle slides into the ditch area at a relatively high speed and, secondly, the rebound of the wheels on one side of the vehicle will only occur when the vehicle enters the ditch at a certain minimum speed.

A further aspect of the present invention may be revealed when, in the step of detecting a detection of a ditch drive is inhibited when the detection value exhibits a value lying outside the detection value range. Such an embodiment of the present invention provides the advantage that a certain plausibilization of the sensor signals obtained may take place as early as during the detecting of the ditch drive. In this manner, possible measuring errors may be detected fast and efficiently so that such an embodiment of the present invention may provide an additional safety gain in the detection of the ditch drive of the vehicle.

Furthermore, so as to ensure maximum safety for the driver of a vehicle during the drive, in a further embodiment of the invention, a step of triggering safety means may be provided when a ditch drive of the vehicle is detected in the step of detecting. Especially a triggering of a time-uncritical safety means can be accomplished, which provides a safety function for example for more than 0.25 seconds. Thus a passenger of the vehicle can be held in a position in which time-critical safety means exhibit the best effect.

The invention is exemplarily explained in further detail by means of the accompanying drawings, in which:

Fig. 1        shows a block diagram of an application scenario for a first embodi- ment of the present invention;
Figs. 2a-c    show representations of dual spring models of the vehicle for different driving conditions, in a transition from a road surface to a ditch;
Figs. 3a-b    show representations of further dual spring models of the vehicle for different driving states, in a transition from a road drive to a ditch drive;
Figs. 4a-b    show representations of a roll angle in a deflection of the wheels in a ditch drive (Fig. 4a) as opposed to a slope drive (Fig. 4b);
Fig. 5        shows a flow chart of an embodiment of the present invention in the form of a method for detecting a ditch drive of a vehicle; and
Fig. 6        shows a flow chart of a further embodiment of the present invention in the form of a method.

In the figures, like or similar elements may be provided with like or similar reference numbers, with a repeated description being dispensed with. In addition, the figures of the drawings, the description thereof as well as the claims include numerous features in combination. A person skilled in the art clearly understands that these features may also be regarded individually or that they may be combined to form further combinations that are not explicitly described herein. Furthermore, the invention may in the following description be discussed using different measures and dimensions, whereby stating these measures and dimensions is not to be understood such that the invention is to be understood as limited to these measures and dimensions. Furthermore, inventive method steps may also be executed repeatedly or in an order other than described. If an embodiment includes an "and/or" connection between a first feature and a second feature, this may be interpreted such that the embodiment may, according to one form, comprise both the first feature and a second feature and, according to another form, comprise the first feature only or the second feature only.

A particularly advantageous application of the present invention consists in enabling early activation of the time-uncritical restraint means in dangerous driving situations, which, in complex crash events, may occur a considerable time before the actual vehicle collision, in which the time-critical restraint means must be activated. An important element in a typical dangerous driving situation, the "run off road", is the "ditch drive".

Early and safe detection of a "ditch drive" enables, in combination with other driving situation elements, the early activation of time-uncritical restraint means in dangerous situations. This serves to guarantee that the occupants are fixed in a position useful for time-critical restraint means in sufficient time. This serves to ensure fundamental protection in the case of protracted, complex occupant movements, in which time-critical, one-time-effective safety systems cannot offer complete protection. The approach presented here guarantees that in the subsequent time course of the vehicle movement, a significant risk of injury to the occupants is safely detected, whereby the early activation of irreversible restraint means is also made possible, for example.

An important aspect of the present invention is the finding that complex crash scenarios are caused by the temporal linking of "dangerous events". One fundamental element of such "dangerous events" is the ditch drive. The safe classification of a ditch drive requires the selection of characteristic features. The possible amount of features characteristic for the ditch drive detection may include, among other things, the features listed below:

- Roll acceleration
- Roll rate (ArX)
- Roll angle
- Vertical acceleration (AccZ)
- Yaw rate
- Lateral acceleration (AccY)
- Speeds of the individual wheels
- Braking and driving torque at the individual wheels
- Steering angle

The safe classification of a ditch drive may include an evaluation of a selection of the features mentioned or the evaluation of the entirety of the feature mentioned. Advantageously, the individual features are suitably grouped for the representation of the essential elements or phases of a ditch drive.

A course of action for the classification of a ditch drive may e.g. include a total of three elements of phases:

1. Start and reset criterion for the "ditch detection"
2. Logic of the "ditch detection" and elimination logic
3. Independent plausibilization of the "ditch detection"

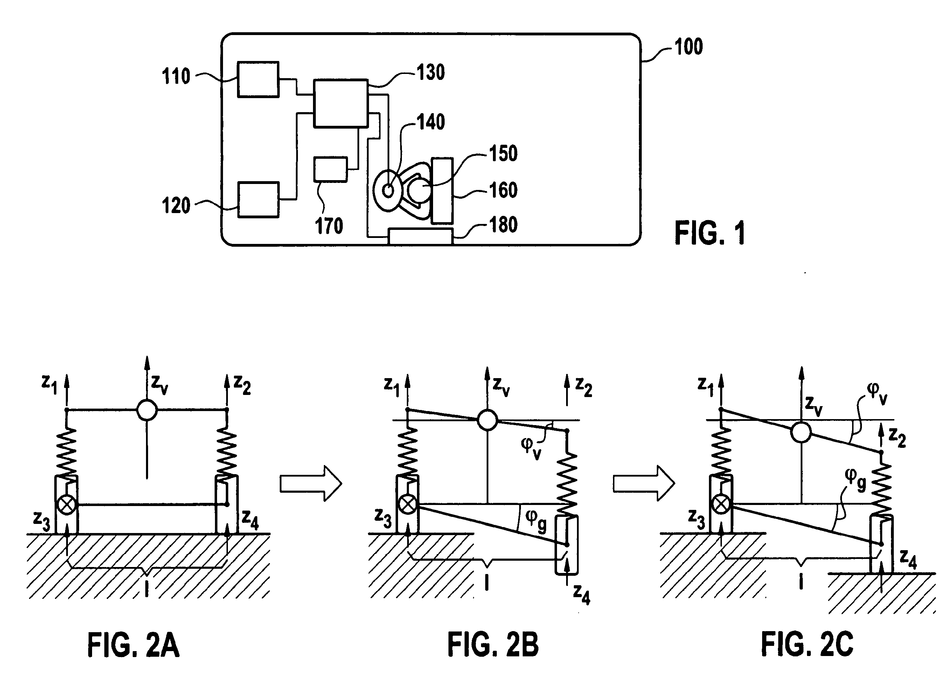

For clarifying the application of the approach proposed here, it is first more closely shown how the detection of a ditch drive, which will be explained in greater detail in the following, is incorporated in a safety system for a vehicle. For this purpose, there is represented in Fig. 1 a vehicle 100, which comprises several sensors for the detection of a critical driving situation. There may e.g. be provided, in a front or rear area, acceleration sensors 110 or ultrasonic sensors 120, which may each be connected to an evaluation unit 130. The two sensor types mentioned are only exemplarily chosen in order to be able to better illustrate the functionality of a safety system. Therefore, instead of acceleration or ultrasonic sensors, sensor types reacting to other physical quantities may be used.

Given a certain signal constellation of signals of the acceleration sensor 110 and/or the ultrasonic sensor 120, the evaluation unit 130 may trigger irreversible safety means such as a front airbag 140 in the steering wheel of a driver 150 of the vehicle 100, for example. However, it is to be noted that the time interval, in which the front airbag 140 provides a protective effect, is as short as a few milliseconds (time-critical safety means). However, if the vehicle occupant 150, that is the driver 150, is not sitting in an upright position on the vehicle seat 160, the front airbag 140 cannot provide optimum protection. It may even be that such a situation poses an additional risk of injury to the driver 150.

A deflection of the driver 150 from the position for the optimum protective effect of the front airbag 140 or other time-critical safety means may e.g. occur when the vehicle, prior a crash, drives up or down a ditch, whereby the vehicle occupant 150 is subjected to lateral forces. In order to nonetheless ensure an as good as possible protective effect of the time-critical safety means 140 in such a situation of a ditch drive, the approach that is explained in greater detail in the following may be used. For the implementation of this approach, a further sensor 170 may be used, which detects a quantity related to a roll movement of the vehicle 100, that is a movement of the vehicle 100 on its longitudinal axis. The quantity detected by the sensor 170 may be the roll angle, a roll rate or a roll acceleration, the quantity detected being transmitted to the evaluation unit 130. By differentiation or integration, in a manner known to a person skilled in the art, a roll rate and/or a roll acceleration may be determined from a roll angle, or a roll rate and/or a roll angle may be determined from a roll acceleration. Then, using the roll acceleration, the roll rate or the roll angle, the ditch drive of the vehicle 100 may be detected according to the approach, which will be explained in greater detail in the following. If such a ditch drive is detected, e.g. a time-uncritical safety means 180 (such as e.g. a curtain airbag) may be activated. This serves to hold the vehicle occupant 150 in a position, in which a time-critical safety means such as the front airbag 140 may offer optimum protection. This time-uncritical safety means 180 may provide a protective effect for a substantially longer period of time then the time-critical safety means 140, for example in the range of several seconds up to several minutes. What is important in the present situation is, however, that the time-uncritical safety means is activated early in order to hold the vehicle occupant 150 in the optimum position. This, in turn, results in the fact that a very precise detection of an event, which might move the vehicle occupant 150 out of their optimum position, is required. The present approach specifically enables a highly precise detection of a ditch drive gathered from a small amount of sensor signals.

According to the embodiment presented here, the classification method of a ditch drive includes a total of four elements or phases, which, however, must not all mandatorily be effected for the inventive approach to be fulfilled.

A first feature may be identified in selecting a start and reset criterion for the detection of a ditch drive.

In this first phase, suitable features for a start and reset criterion are selected, the roll acceleration and the vertical acceleration forming a good basis for the detection of a ditch drive of the vehicle. For illustrating the inventive approach, the vehicle 100 is subsequently represented in the form of a dual spring model, wherein the shock absorbers on the front and rear wheel suspensions may be regarded as springs, for example. The springs may therefore be regarded as arranged at a distance l. At the upper and lower ends of the springs, forces in the vertical direction (that is in the z direction) $Z_1$, $Z_2$, $Z_3$, $Z_4$ act on the vehicle or at least the respective points of suspension of the springs, such as is made clear in the following figures. Accordant to the representations of Fig. 2, a ditch drive is made up of at least three driving conditions. In the driving condition on a level ground outside of a ditch (Fig. 2a), the roll dynamics of the vehicle body is substantially determined by the steering dynamics and lateral forces (wind, collision, ...).

The driving condition in the ditch is illustrated in the representation of Fig. 2c, wherein all wheels touch the ground. That is, the vehicle drives down the ditch in a transverse manner. Although finite roll dynamics may be observed in both driving conditions, same is usually small as compared to the roll dynamics of the driving condition illustrated in Fig. 2b. If at least one of the wheels of the vehicle is in a rebound condition (see Fig. 2b), then, considering the vertical acceleration, a large roll acceleration based on different tilt angles of the vehicle axles $\varphi_g$ and the vehicle body $\varphi_v$ is usually to be observed. Vehicle-dependent factors of the roll acceleration are the moment of inertia $J_x$ on the longitudinal axis, the vehicle mass m, the spring constant s and the vehicle width l

Therefore, Fig. 2 depicts the three essential driving conditions for the classification of a ditch drive. In Fig. 2a, the following correlations apply:

$$\ddot{\varphi}_v = 0 \text{ and } \varphi_g = \varphi_v$$

wherein $\ddot{\varphi}_v$ represents the roll acceleration of the vehicle body. The equation of motion for the roll acceleration accordant to the representation of Fig. 2b is based on the illustrated dual spring model of the vehicle and Newton's approach to torque

$$J \cdot \overrightarrow{\ddot{\varphi}_v} = \vec{F} \times \vec{r}.$$

Here, the correlation applying in Fig. 2b is

$$\ddot{\varphi}_v = -\frac{s}{J_x}\frac{l^2}{2}\left[\varphi_v - \varphi_g\right] \text{ and } \ddot{\varphi}_v = -\frac{m}{J_x}\left[\frac{l}{2}(\ddot{z}_v + g)\right],$$

wherein J represents the inertia tensor of the vehicle, m represents the vehicle's mass, s represents the spring constant, $\ddot{z}_v$ represents the vehicle acceleration in the vertical direction, g represents the acceleration of gravity and l represents the vehicle width. For a driving condition according to Fig. 2c, again the following correlations apply:

$$\ddot{\varphi}_v = 0 \text{ and } \varphi_g = \varphi_v$$

As can be seen from Fig. 2, specifically Fig. 2b, a remarkable roll acceleration in the transition of the vehicle from a level ground (Fig. 2a) to the inclined ground (Fig. 2c) only occurs under certain conditions during the transition. For example, if the transition is occurring very slowly, the tilt angle of the axles will be similar to that of the body so that, in most cases, a very slight roll acceleration or none at all will be observed. As often a minimum speed is required for the detection of a dangerous driving condition (otherwise an accident will be of no severe consequences), it may be assumed that, in the transition of the vehicle to the ditch, a remarkable roll acceleration, which may then be used as a trigger signal for the evaluation of a ditch drive, will at least temporarily be observed.

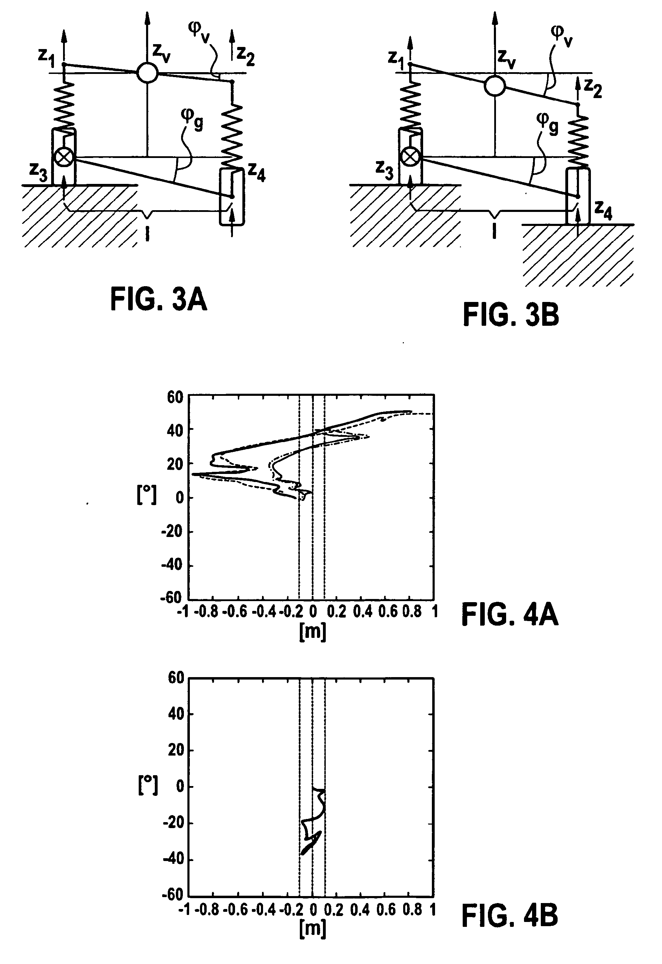

A suitable feature for the triggering of the evaluation of a driving situation detection for the ditch drive is illustrated in Fig. 3. The real driving condition "ditch" will typically be composed of the two driving conditions "all wheels on the ground" (Fig. 3a) and "wheels on one side of the vehicle have no contact to the ground" (Fig. 3b). As already illustrated under reference to Fig. 2b, in the driving situation according to Fig. 3a, the following correlation applies.

$$\ddot{\varphi}_v = -\frac{m}{J_x}\left[\frac{l}{2}(\ddot{z}_v + g)\right],$$

whereas, in the driving situation according to Fig. 3b (or according to Fig. 2c), what applies is

$$\ddot{\varphi}_v = 0.$$

For a transition between the driving conditions of the illustrations of Fig. 3a and Fig. 3b, the following applies:

$$\ddot{\varphi}_v = -\frac{m}{J_x}\left[y \cdot (\ddot{z}_v - g)\right] \text{ with } y = \left[0, \frac{l}{2}\right].$$

A suitable feature describing the transition between the two conditions is therefore the feature y. The feature y may assume values between 0 and half the vehicle width I/2 and is calculated from the quotient of roll acceleration and vertical acceleration according to the correlation

$$y = -\frac{J_x \cdot \ddot{\varphi}_v}{m \cdot (\ddot{z}_v + g)}.$$

Therefore, in Fig. 3, the real driving condition "ditch drive" may be detected as a composition of the two driving conditions "all wheels on the ground" (Fig. 3a) and "wheels on one side of the vehicle without contact to the ground" (Fig. 3b). As, basically, a roll acceleration is to be expected in one of the driving conditions shown, an at least reduced roll acceleration will also be observed in a composed condition. Therefore, a suitable feature to describe the composed condition is the quantity y=[0,I/2]. This feature y assumes the value y=l/2 in the vehicle condition represented in Fig. 3a, and the value y=0 in the condition illustrated on the right-hand side.

Figs. 4a and 4b show exemplary characteristics of the features y for the ditch drive and the roll angle for ditch drives (Fig. 4a) and a drive onto a ramp as a non-ditch drive (Fig. 4b). In the Figs. 4a and 4b, the feature y is plotted on the x-axis and the feature "roll angle" is plotted on the y-axis. In Fig. 4a, the feature trajectories (y, roll angle) are plotted as a function of the time for a total of four ditch test drives. In Fig. 4b, the feature trajectory for a "non-ditch test drive" is plotted. In spite of large actual roll angles of the vehicle, the feature y is, in this case, considerably smaller than in the ditch drives according to Fig. 4a.

Although large roll angles are to be observed for the vehicle both in Fig. 4a and in Fig. 4b, the feature y is observed to be considerably more distinctive in the drive through a ditch. This may be attributed to the fact that, in a non-ditch drive, the roll acceleration will compensate or at least attenuate the vertical acceleration (and the acceleration of gravity). In a ditch drive, there is no such effect.

If values outside the value range [0,1/2] are observed for the feature y, then the feature is to be evaluated as non-plausible and the logic is to be set to "reset". If need be, with regard to possible sensor errors, the feature y should first be observed concerning the characteristic value range, before the start condition may be fulfilled. Therefore, threshold values, which are e.g. plotted as dotted lines in the representations of Figs. 4a and 4b, may be used for the plausibilization and for the starting or resetting of the ditch drive detection function.

In a second phase or second element of the ditch drive detection, the roll rate or the roll angle may be regarded as a direct feature in the transition from a drive on a road surface to a ditch drive. In a ditch drive, there occurs a significant roll rate and a roll angle of the vehicle, which may be calculated by integrating the roll rate. As a trigger and reset condition for the roll angle calculation (and therefore the detection of the ditch drive), the start/reset criterion, which was aforementioned in the first phase, may be used, for example. Otherwise, established integration routines e.g. of the function "RoSe", which are already implemented in control devices made by Bosch, may be used.

The ditch drive is detected when e.g. the roll rate exceeds a threshold value characteristic with respect to the roll angle and the aforementioned start/reset criterion is fulfilled or was fulfilled shortly before. Driving situations, which generate similar features but may not be attributed to a "ditch drive", may be excluded hereby, as, e.g. by the aforementioned evaluation of the feature y mentioned, a pre-plausibilization of the roll quantity sensor values received with respect to a ditch drive has already been made possible. Both the start and reset criterion for the "ditch drive detection" and the abovementioned "ditch drive detection" itself are based on observing the features "vertical acceleration", "roll acceleration", "roll rate" and/or "roll angle".

The aforedescribed approach serves to distinguish driving situations of a ditch drive from driving situations not requiring a triggering of safety means. For example, in a first exemplary case of a lateral collision with an arbitrary obstacle (e.g. another vehicle), there also is the possibility that all of the mentioned features or sensor quantities (i.e. the signal values for the quantities of "vertical acceleration", "roll acceleration", "roll rate" and/or "roll angle"), exhibit values that are typical for a ditch drive also. However, one substantial difference between the ditch drive and the lateral vehicle collision is that, in the ditch drive, the roll dynamics is induced by the acceleration of gravity, whereas, in a vehicle collision, it is induced by the collision itself. By analyzing the lateral and vertical accelerations in combination with the roll acceleration, the misinterpretation in the first exemplary case may be eliminated.

In a second exemplary case, in an occurrence of a grazing collision of the vehicle with a stationary object (pole) or a second vehicle, roll dynamics similar to the ditch drive may be induced. By an evaluation of peripheral pressure and acceleration sensors in the proximity of the lateral vehicle area in relation to the central sensor system or other peripheral sensors, this type of vehicle dynamics may be separated from a "ditch drive".

In a third phase or a third element of the ditch drive detection according to embodiment presented in detail here, an independent plausibilization of the "ditch drive detection" may be effected by an evaluation of sensor signals independent from a roll movement of the vehicle. An independent plausibilization of a "ditch drive" may e.g. by effected by an evaluation of the wheel speeds on the left- and right-hand side of the vehicle, of the yaw rate, of the steering intervention and/or of the braking pressures on the individual wheels. The ratio of the wheel speeds on the left- and right-hand vehicle sides or the features derived therefrom (vibrations, ...) generally shows a characteristic variation when the vehicle passes from the "non-ditch" (i.e. a level road ground, e.g. on a street) to the ditch. Such an alteration of the wheel speed may also be observed in a tight cornering, for example. By evaluating the yaw rate, possibly/additionally or alternatively also the steering angle and/or a potential braking intervention, basically, a relative change of the wheel speeds on both sides of the vehicle may be predicted. For the case that a relative change of the wheel speeds or features derived therefrom may not be allocated to a cornering or a unilateral braking intervention, the ditch drive will be a plausible explanation for the observation stated above.

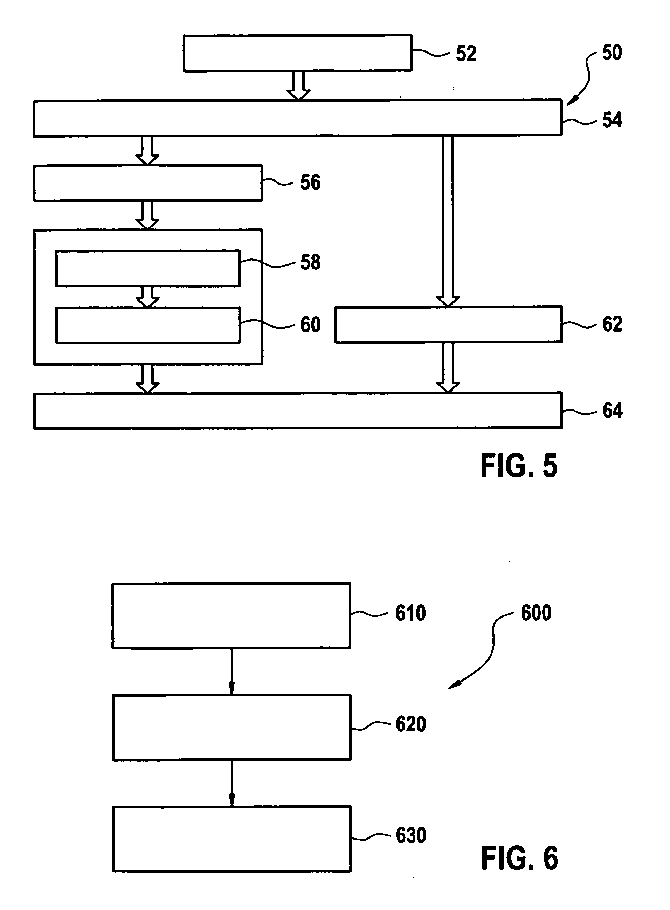

In Fig. 5, the aforedescribed embodiment may once again be illustrated in the form of an overview. This overview represents a flow chart 50 of the embodiment of the "ditch drive" detection, which was herein described in detail. In a first step 52, sensor data, e.g. data from rotation rate, acceleration, wheel speed, braking pressure and steering angle sensors, from which certain features may be determined in a second step 54, may be received. In this step, e.g. the aforementioned features may be derived. For example, in this step 54, an integration or differentiation of the detected roll quantity may be effected so that e.g. the roll acceleration, the roll rate or the roll angle may be provided in the form of a prepared quantity. The features provided in the step 54 are used in order to derive therefrom criteria for a start and reset of the ditch detection in a further step 58, for example. For this purpose, the abovementioned feature y may be evaluated, for example. If the aforementioned start criteria for the evaluation of the ditch drive are fulfilled, in a further step 58, an observation of the roll acceleration (or a roll angle integration) may be effected, and, when a ditch drive may be suggested from the roll acceleration observed (or the roll angle obtained), an elimination logic may prevent the misinterpretation of the sensor data received in a further step 60. In order to ensure a very high precision of the ditch drive detection, an evaluation of at least one sensor signal independent from a roll movement of the vehicle may be effected in a parallel step 62. Hereby, a ditch drive plausibilization independent from the roll movement may be obtained. By linking the results of the trigger, elimination and plausibilization logic, the decision for the detection of a ditch drive is then effected in a final step 64.

In Fig. 6, a further embodiment of the present invention in the form of a method 600 for the detection of a ditch drive of a vehicle is represented. The method 600 includes a first step of receiving 610 a roll acceleration sensor signal, which represents an acceleration of the vehicle on its longitudinal axis. Furthermore, the method 600 comprises a second step of determining 620 a detection value using the roll acceleration sensor signal or of using the roll acceleration sensor signal as the detection value. In a third step, the method 600 comprises detecting 630 of the ditch drive of the vehicle when the detection value exhibits a value lying within a predetermined detection value range.

**Claims**

1. Method (600) for the detection of a ditch drive of a vehicle (100), the method (600) comprising:

   - receiving (610) a roll acceleration sensor signal representing an acceleration of at least a part of the vehicle on a longitudinal axis of the vehicle (100);
   - determining (620) a detection value (y) using the roll acceleration sensor signal or using the roll acceleration sensor signal as the detection value; and
   - detecting (630) the ditch drive of the vehicle (100) when the detection value (y) exhibits a value lying within a predetermined detection value range.

2. Method (600) according to claim 1, **characterized in that**, in the step of receiving (610), at least one further acceleration signal value is received, the at least one further acceleration signal value representing a vertical acceleration with respect to the vehicle and/or the acceleration of gravity, and wherein, in the step of determining (630), the detection value (y) is determined using the at least one further acceleration signal value.

3. Method (600) according to any one of the preceding claims, **characterized in that**, in the step of receiving (610), an inertia information (J) of the vehicle (100) with respect to the current driving conditions and/or a mass information on the mass (m) of the vehicle (100) is received, wherein, in the step of determining, the detection value (y) is determined based on the inertia information (J) and/or the mass information (m).

4. Method (600) according to any one of the preceding claims, **characterized in that**, in the step of detecting (630) the ditch drive is detected when the detection value (y) lies in a detection value range fundamentally including values between zero and a final value, the final value representing half of a width (l) of the vehicle (100), wherein the detection value y is calculated according to the following equation

$$y = -\frac{J_x \cdot \ddot{\varphi}_v}{m \cdot (\ddot{z}_v + g)},$$

   in which $J_x$ represents the inertia moment on the longitudinal axis of the vehicle, m represents the mass of the vehicle, $\ddot{\varphi}_v$ represents the roll acceleration of the vehicle body, $\ddot{z}_v$ represents the vehicle acceleration in the vertical direction and g represents the acceleration of gravity.

5. Method (600) according to any one of the preceding claims, **characterized in that**, in the step of detecting (630), the ditch drive is detected when both the detection value (y) was at least temporarily within the predetermined detection value range and, following this, the roll acceleration sensor signal, a roll rate additionally received or a roll angle additionally received assumes a value larger than a predefined roll quantity threshold value within a predetermined time interval.

6. Method (600) according to any one of the preceding claims, **characterized in that**, in the step of receiving (610), further a plausibilization signal is received, which represents a physical quantity independent from the roll movement of the vehicle, and wherein, in the step of detecting (630), the ditch drive of the vehicle (100) is detected when the plausibilization signal fulfils a predetermined plausibilization criterion.

7. Method (600) according to claim 6, **characterized in that**, in the step of receiving (610), at least one plausibilization signal is received, which represents a wheel speed of a wheel of the vehicle (100), the yaw rate of the vehicle (100), a steering intervention by the driver (150) of the vehicle (100) or at least a braking or driving torque at one of the edges of the vehicle (100).

8. Method (600) according to any one of the preceding claims, **characterized in that**, in the step of receiving (610), further a speed sensor signal is received, which represents a speed of the vehicle (100), wherein, in the step of detecting, a ditch drive is detected when the speed sensor signal exhibits a value lying above a predetermined minimum speed threshold value.

9. Method (600) according to any one of the preceding claims, **characterized in that**, in the step of detecting (630) a detection of a ditch drive is inhibited when the detection value (y) exhibits a value lying outside the detection value range.

**10.** Method (600) according to any one of the preceding claims, **characterized in that**, further a step of triggering safety means (180) is provided when, in the step of detecting (630), a ditch drive of the vehicle is detected.

**11.** Control device (130) configured to perform the steps of a method (600) according to any one of claims 1 to 10.

**12.** Computer program product with a program code stored on a machine-readable carrier, for performing the method (600) according to any one of claims 1 to 10, when the program is executed on a control device (130).

**Patentansprüche**

**1.** Verfahren (600) zur Detektion einer Fahrt eines Fahrzeugs (100) in den Graben, wobei das Verfahren (600) Folgendes umfasst:

- Empfangen (610) eines Wankbeschleunigungssensorsignals, das eine Beschleunigung wenigstens eines Teils des Fahrzeugs um eine Längsachse des Fahrzeugs (100) repräsentiert;
- Bestimmen (620) eines Detektionswertes (y) unter Verwendung des Wankbeschleunigungssensorsignals oder Verwenden des Wankbeschleunigungssensorsignals als Detektionswert; und
- Detektieren (630) der Grabenfahrt des Fahrzeugs (100), wenn der Detektionswert (y) einen Wert aufweist, der innerhalb eines vorgegebenen Detektionswertebereichs liegt.

**2.** Verfahren (600) nach Anspruch 1, **dadurch gekennzeichnet, dass** im Empfangsschritt (610) wenigstens ein weiterer Beschleunigungssignalwert empfangen wird, wobei der wenigstens eine weitere Beschleunigungssignalwert eine Vertikalbeschleunigung bezüglich des Fahrzeugs und/oder die Erdbeschleunigung repräsentiert und wobei im Bestimmungsschritt (630) der Detektionswert (y) unter Verwendung des wenigstens einen weiteren Beschleunigungssignalwertes bestimmt wird.

**3.** Verfahren (600) nach einem der vorhergehenden Ansprüche, **dadurch gekennzeichnet, dass** im Empfangsschritt (610) Trägheitsinformationen (J) des Fahrzeugs (100) bezüglich der momentanen Fahrbedingungen und/oder Masseinformationen über die Masse (m) des Fahrzeugs (100) empfangen werden, wobei im Bestimmungsschritt der Detektionswert (y) auf der Grundlage der Trägheitsinformationen (J) und/oder der Masseinformationen (m) bestimmt wird.

**4.** Verfahren (600) nach einem der vorhergehenden Ansprüche, **dadurch gekennzeichnet, dass** im Detektionsschritt (630) die Grabenfahrt detektiert wird, wenn der Detektionswert (y) in einem Detektionswertebereich liegt, der im Wesentlichen Werte zwischen null und einem Endwert umfasst, wobei der Endwert die Hälfte einer Weite (1) des Fahrzeugs (100) repräsentiert, wobei der Detektionswert y gemäß der folgenden Gleichung

$$y = -\frac{J_x \cdot \ddot{\varphi}_v}{m \cdot (\ddot{z}_v + g)}$$

berechnet wird, wobei $J_x$ das Trägheitsmoment um die Längsachse des Fahrzeugs repräsentiert, m die Masse des Fahrzeugs repräsentiert, $\varphi v$, die Wankbeschleunigung der Fahrzeugkarosserie repräsentiert, $\ddot{z}_v$ die Fahrzeugbeschleunigung in der vertikalen Richtung repräsentiert und g die Erdbeschleunigung repräsentiert.

**5.** Verfahren (600) nach einem der vorhergehenden Ansprüche, **dadurch gekennzeichnet, dass** im Detektionsschritt (630) die Grabenfahrt detektiert wird, wenn sowohl der Detektionswert (y) wenigstens zeitweise im vorgegebenen Detektionswertebereich war und darauf folgend das Wankbeschleunigungssensorsignal, eine zusätzlich empfangene Wankrate oder ein zusätzlich empfangener Wankwinkel innerhalb eines vorgegebenen Zeitintervalls einen Wert annimmt, der größer ist als ein vorgegebener Wankgrößen-Schwellenwert.

**6.** Verfahren (600) nach einem der vorhergehenden Ansprüche, **dadurch gekennzeichnet, dass** im Empfangsschritt (610) ferner ein Plausibilisierungssignal empfangen wird, das eine von der Wankbewegung des Fahrzeugs unabhängige physikalische Größe repräsentiert, und wobei im Detektionsschritt (630) die Grabenfahrt des Fahrzeugs (100) detektiert wird, wenn das Plausibilisierungssignal ein vorgegebenes Plausibilisierungskriterium erfüllt.

7. Verfahren (600) nach Anspruch 6, **dadurch gekennzeichnet, dass** im Empfangsschritt (610) wenigstens ein Plausibilisierungssignal empfangen wird, das eine Radgeschwindigkeit eines Rads des Fahrzeugs (100), die Gierrate des Fahrzeugs (100), einen Lenkeingriff durch den Fahrer (150) des Fahrzeugs (100) oder wenigstens ein Brems- oder Antriebsmoment an einer der Flanken des Fahrzeugs (100) repräsentiert.

8. Verfahren (600) nach einem der vorhergehenden Ansprüche, **dadurch gekennzeichnet, dass** im Empfangsschritt (610) ferner ein Geschwindigkeitssensorsignal empfangen wird, das eine Geschwindigkeit des Fahrzeugs (100) repräsentiert, wobei im Detektionsschritt eine Grabenfahrt detektiert wird, wenn das Geschwindigkeitssensorsignal einen Wert aufweist, der über einem vorgegebenen Minimalgeschwindigkeits-Schwellenwert liegt.

9. Verfahren (600) nach einem der vorhergehenden Ansprüche, **dadurch gekennzeichnet, dass** im Detektionsschritt (630) eine Detektion einer Grabenfahrt unterdrückt wird, wenn der Detektionswert (y) einen Wert aufweist, der außerhalb des Detektionswertebereichs liegt.

10. Verfahren (600) nach einem der vorhergehenden Ansprüche, **dadurch gekennzeichnet, dass** ferner ein Schritt vorgesehen ist, in dem Sicherheitsmittel (180) ausgelöst werden, wenn im Detektionsschritt (630) eine Grabenfahrt des Fahrzeugs detektiert wird.

11. Steuervorrichtung (130), die konfiguriert ist, um die Schritte eines Verfahrens (600) nach einem der Ansprüche 1 bis 10 auszuführen.

12. Computerprogrammprodukt mit einem Programmcode, der auf einem maschinenlesbaren Träger gespeichert ist, zum Ausführen des Verfahrens (600) nach einem der Ansprüche 1 bis 10, wenn das Programm an einer Steuervorrichtung (130) ausgeführt wird.

**Revendications**

1. Procédé (600) de détection de la circulation d'un véhicule (100) dans un fossé, le procédé (600) comprenant :

   - la réception (610) d'un signal de capteur d'accélération en roulis représentant une accélération d'au moins une partie du véhicule sur un axe longitudinal du véhicule (100) ;
   - la détermination (620) d'une valeur de détection (y) en utilisant le signal de capteur d'accélération en roulis ou l'utilisation du signal de capteur d'accélération en roulis comme valeur de détection ; et
   - la détection (630) de la circulation du véhicule (100) dans le fossé lorsque la valeur de détection (y) présente une valeur qui se trouve dans une plage de valeurs de détection prédéterminée.

2. Procédé (600) selon la revendication 1, **caractérisé en ce que** dans l'étape de réception (610), au moins une valeur de signal d'accélération supplémentaire est reçue, ladite au moins une valeur de signal d'accélération supplémentaire représentant une accélération verticale par rapport au véhicule et/ou l'accélération de la gravité, et selon lequel, dans l'étape de détermination (630), la valeur de détection (y) est déterminée en utilisant l'au moins une valeur de signal d'accélération supplémentaire.

3. Procédé (600) selon l'une quelconque des revendications précédentes, **caractérisé en ce que** dans l'étape de réception (610), une information d'inertie (J) du véhicule (100) par rapport aux conditions de circulation actuelles et/ou une information de masse sur la masse (m) du véhicule (100) sont reçues, selon lequel, dans l'étape de détermination, la valeur de détection (y) est déterminée en se basant sur l'information d'inertie (J) et/ou l'information de masse (m).

4. Procédé (600) selon l'une quelconque des revendications précédentes, **caractérisé en ce que** dans l'étape de détection (630), la circulation dans le fossé est détectée lorsque la valeur de détection (y) se trouve dans une plage de valeurs de détection incluant fondamentalement les valeurs entre zéro et une valeur finale, la valeur finale représentant la moitié d'une largeur (1) du véhicule (100), selon lequel la valeur de détection y est calculée conformément à l'équation suivante :

$$y = \frac{J_{x,\varphi v}}{m.(z_v + g)}$$

dans laquelle $J_x$ représente le moment d'inertie sur l'axe longitudinal du véhicule, m représente la masse du véhicule, $\varphi_v$ représente l'accélération en roulis de la carrosserie du véhicule, $z_v$ représente l'accélération du véhicule dans le sens vertical et g représente l'accélération de la gravité.

5. Procédé (600) selon l'une quelconque des revendications précédentes, **caractérisé en ce que** dans l'étape de détection (630), la circulation dans le fossé est détectée lorsque à la fois la valeur de détection (y) se trouvait au moins temporairement à l'intérieur de la plage de détection prédéterminée et, après cela, le signal de capteur d'accélération en roulis, un taux de roulis reçu en plus ou un angle de roulis reçu en plus suppose une valeur supérieure à une valeur de seuil de quantité de roulis prédéfinie à l'intérieur d'un intervalle de temps prédéfini.

6. Procédé (600) selon l'une quelconque des revendications précédentes, **caractérisé en ce que** dans l'étape de réception (610), un signal de niveau de plausibilité est en outre reçu, lequel représente une grandeur physique indépendante du mouvement de roulis du véhicule, et selon lequel, dans l'étape de détection (630), la circulation du véhicule (100) dans le fossé est détectée lorsque le signal de niveau de plausibilité satisfait à un critère de plausibilité prédéterminé.

7. Procédé (600) selon la revendication 6, **caractérisé en ce que** dans l'étape de réception (610), au moins un signal de niveau de plausibilité est reçu, lequel représente une vitesse de roue d'une roue du véhicule (100), la vitesse de lacet du véhicule (100), une intervention sur la direction par le conducteur (150) du véhicule (100) ou au moins un couple de freinage ou de conduite au niveau de l'un des bords du véhicule (100).

8. Procédé (600) selon l'une quelconque des revendications précédentes, **caractérisé en ce que** dans l'étape de réception (610), un signal de capteur de vitesse est en outre reçu, lequel représente une vitesse du véhicule (100), selon lequel, dans l'étape de détection, une circulation dans le fossé est détectée lorsque le signal de capteur de vitesse présente une valeur qui se trouve au-dessus d'une valeur de seuil de vitesse minimale prédéterminée.

9. Procédé (600) selon l'une quelconque des revendications précédentes, **caractérisé en ce que** dans l'étape de détection (630), une détection de la circulation dans le fossé est inhibée lorsque la valeur de détection (y) présente une valeur qui se trouve en dehors de la plage de valeurs de détection.

10. Procédé (600) selon l'une quelconque des revendications précédentes, **caractérisé en ce qu'**il existe une étape supplémentaire de déclenchement de moyens de sécurité (180) lorsque, dans l'étape de détection (630), une conduite du véhicule dans le fossé est détectée.

11. Dispositif de commande (130) configuré pour exécuter les étapes d'un procédé (600) selon l'une quelconque des revendications 1 à 10.

12. Produit de programme informatique comprenant un code de programme stocké sur un support lisible par machine pour exécuter le procédé (600) selon l'une quelconque des revendications 1 à 10, lorsque le programme est exécuté sur un dispositif de commande (130).

FIG. 1

FIG. 2A

FIG. 2B

FIG. 2C

FIG. 3A

FIG. 3B

FIG. 4A

FIG. 4B

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102006045682 B3
- EP 2058180 A
- US 20040176897 A1
- GB 2335521 A